# EUROPEAN PATENT APPLICATION

(11) **EP 4 060 351 A1**
(43) Date of publication of application: **21.09.2022**
(21) Application number: 21163501.6
(22) Date of filing: 18.03.2021
(51) Int. Cl.: G01P 13/00, G01F 1/06, G01F 1/10, G01F 1/20, G01F 1/34, G01F 1/37, G01F 1/38, G01F 15/06, G01F 3/00, B25F 5/00, A47L 7/00, B23B 45/00, G07C 3/00

(54) **METERING DEVICE FOR DETERMINING USAGE OF A TOOL**

(71) Applicant: Werme Patent AB, 754 54 Uppsala (SE)
(72) Inventor: WERME, Martin, 764 91 Väddö (SE)
(74) Representative: AWA Sweden AB

(57) **Abstract**

A metering device (100) is disclosed, which is configured to be arranged in an airflow path (110) of a handheld tool. The metering device comprises a flow detector (120) configured to detect an airflow (F) passing through the airflow path during use of the tool, and a processor (130) configured to receive a signal from the flow detector. The processor is configured to determine a usage pattern of the tool based on the received signal and to cause the usage pattern to be stored in a storage area (140). A system comprising a server (10) and such a metering device is also disclosed.

## Description

### TECHNICAL FIELD

The present inventive concept relates a technique for determining a usage pattern of a device, and more specifically to a metering device configured be arranged in an airflow path of a handheld tool.

### BACKGROUND

There is a growing interest for the commercial sharing economy, which involves the concept of renting equipment rather than buying it. This affects the traditional business models of many companies, which may turn their focus into providing services rather than trading the equipment per se.

Handheld tools, such as suction devices for the construction and installation industry are examples of such equipment, which may be rented when needed rather than purchased. The suction devices may for example be used for draining and cleaning, and in particular examples for removing water from a section of a water pipe to enable work, such as welding, to be performed on that section.

It is common to rent out the equipment to the customer for a specific period, and thus charge the customer on a daily, weekly or monthly basis. However, considering the rapidly changing market and growing competition, there is a need for technical solutions enabling alternative and improved models for renting out equipment and charging the customers.

### SUMMARY

An objective of the present inventive concept is to provide a technique for determining a usage pattern of a tool. Further and/or alternative objectives may be understood from the following.

According to a first aspect of the present inventive concept there is provided a metering device configured to be arranged in an airflow path of a handheld tool such that at least a part of the airflow path extends through the metering device. The metering device comprises a flow detector configured to detect an airflow passing through the airflow path during use of the tool, and a processor configured to receive a signal from the flow detector. The processor is configured to determine a usage pattern of the tool based on the received signal, and to cause the usage pattern to be stored in a storage area.

According to a second aspect a system is provided, comprising a server and a metering device according to the first aspect. The server is configured to receive the usage pattern from the metering device, and to generate a payment request based on the usage pattern.

The present inventive concept is based on the technical insight that the airflow can be used for determining the actual usage of the tool, and that this information can form a basis for a more accurate and precise charging of the customer renting the tool. The metering device can be fitted in the airflow path, for example as a detachable add-on device that can be attached to the air vents of the tool, or as an adapter inserted between a nozzle and a suction tube of a suction device, or at the air supply inlet of an air-powered tool. The flow detector may be employed to generate a signal indicating presence of an airflow in the airflow path, and the signal may then be processed to generate a usage pattern indicating the time the tool has been working.

The present inventive concept allows for the customer to be charged based on the actual usage of the tool rather than on the total rental time. The charged amount may hence reflect the wear of the tool, allowing for the provider of the tool to increase the charged amount in case of excessive usage and offer a discount should it be determined that the tool was used to a lesser extent during the rental period.

The metering device makes it possible to log the usage of the tool during a specified rental period, and to read the logged usage information either continuously or repeatedly during the rental period, or at the return of the tool. The charge may be calculated by the server and presented as a payment request.

According to an embodiment, the metering device may comprise an energy source. The energy source may be configured to power components of the metering device, such as for example the flow detector, the processor or communication components such as transmitters. In some embodiments the energy source may comprise an electric generator configured to be driven by airflow passing through the metering device. The functionality of the electric generator and the flow detector may in some examples be integrated in a single entity. This may allow for the electric generator to be used for detecting the airflow, and/or for the flow detector to be used for generating electric power for operating components of the metering device.

According to an embodiment the energy source may comprise an internal battery, which may be arranged in the metering device. The energy source may hence comprise an accumulator or a rechargeable battery cell that can be charged by electric power generated by an electric generator as mentioned above, and/or by electric power transmitter from an external energy source. The energy from the external energy source may be transmitted over a wireless interface, or over a wired coupling. Preferably, the power generated by the electric generator may be the primary source of energy for powering the metering device and charging the internal battery. This allows for the metering device to be charged during use and thereby reduces the need for dedicated charging time in a docking station or the like.

According to some embodiments the metering device may comprise a communication unit configured to transmit the usage pattern to an external receiver. The communication unit may for example be configured to transmit the usage pattern over a wireless interface or a wired interface. Examples of wireless communication techniques that may be employed to transmit the usage pattern from the metering device include cellular networks and local area networks, and short-range communication protocols such as near-field communication and Bluetooth.

The communication unit may be configured to transmit the user pattern repeatedly, or continuously, during use of the device. Alternatively, the usage pattern may be stored locally in the metering device during use and transmitted at a later point in time, for example once a day, weekly, monthly or upon request. In an example, the usage pattern may be transmitted in connection with the metering device being returned to the service provider. The communication unit may also be configured to operate in an off-line mode, for example in environments with limited connection to cellular networks or the like and transmit the usage pattern later when access to the external receiver is restored.

The metering device may further comprise a functionality allowing it to receive information indicating an identity, or type, of the tool or a part of the tool. This functionality may for example be comprises in the communication unit. The metering device may in some examples be configured to read the identity of type of the tool, or an equipment used with the tools, such as a nozzle, drill bit, saw blade or the like. The information indicating the identity or type may be read by means of a near-field communication (NFC) technique, with the initiator provided in the metering device and the target, such as a tag or sticker carrying the identity or type data, arranged in the tool. In this way, the metering device may retrieve information that can be added to the usage pattern and allow for the user to be charged also based on the type of the tool. In an example, applicable to suction devices, the user can be charged a higher rate when using larger nozzle and a lower rate when using a smaller nozzle.

According to an embodiment the metering device may comprise a positioning unit configured to gather positioning data indicating a location of the metering device. Further, the processor may be configured to associate the usage pattern with the location of the metering device, which allows for the usage time and the actual location of the metering device to be monitored and logged. The positioning unit may be configured to gather positioning data by means of a global navigation satellite system or cellular network data.

According to an embodiment, the metering device may comprise a passageway extending through the metering device and being configured to for part of a suction passageway or an air supply passageway of the tool. In case, the flow detector may be arranged at an inner wall of the passageway. The flow detector may be configured to be actuated by the airflow passing through the passageway, for example in response to a pressure gradient or difference generated by the airflow. An actuation threshold may be implemented for the detection of the airflow so as to reduce the risk for false positives.

According to an embodiment, the metering device may comprise a first end and a second end, with the flow passageway of the metering device passing therebetween. The first end may be configured to be attached to a nozzle of a suction device, and the second end to a suction tube of the suction device. Thus, the metering device may form an adapter whose ends may have a shape and size that allows for the adapter to form a retrofit for different types and makes of devices utilising a suction flow for their operation. Alternatively, or additionally the first end may be configured to be attached to an air line hose conveying pressurised air to an air-powered tool.

According to an embodiment, the tool, to which the metering device may be attached, is a suction tool such as for example a water drainage device configured to remove water by means of the suction flow. The metering device may hence be an adapter configured to convey a suction flow comprising water and may comprise surfaces and components that are adapted for exposure to water.

According to an embodiment, the system may comprise a communication interface configured to receive the usage pattern from the metering device, or from a storage area external to the metering device. The communication interface may be wired or wireless and may be configured to receive a signal carrying data representing the usage pattern. The communication interface may further be communicatively coupled to the server, to which the usage pattern may be transmitted for processing. In some examples, the communication interface may comprise a terminal arranged at the service provider and adapted to read the usage pattern from the metering device as it is returned after the rental. The service provider may for example place the metering device at, or in close vicinity of, the terminal so as to allow for the usage pattern to be transmitted wirelessly over a near-field communication or Bluetooth protocol. In other examples the communication interface may form part of an Internet based or cellular network-based communication channel between the metering device and the server. In case of a cellular network-based communication channel, the metering device may comprise a subscriber identification module (SIM) for identifying and authenticating the metering device.

According to an embodiment, the system may comprise a user interface configured to display the payment request. The payment request may for example be displayed to the person renting the metering device, or to a person representing the service provider, such as a cashier at a till. The payment request may serve the purpose of informing the user of the charge, which may have been determined based on the usage pattern that has been collected by the metering device. The user interface may for example include a display.

In further examples the user interface may comprise a user account that can be accessed online by the user, for example via a webpage. The user interface may allow for the user to log on to their account to administrate the rental services, subscription, and payments as requested by the server.

The user interface may further be configured to indicate that a payment notification has been received by the system, and hence provide a confirmation that the determined charge has been paid.

In further examples the payment notification may be generated manually, for example by the person representing the service provider, or be provided from an external payment system. The person representing the service provider may for example use the communication interface for inputting the payment notification.

According to a third aspect, the present inventive concept may be realised as a method performed in a system according to the second aspect. The method may comprise detecting an airflow passing through the airflow path during use of the tool and generating a signal from the flow detector. The signal may be received at a processor, which determines a usage pattern of the tool based on the received signal. Further, the processor may cause the usage pattern to be stored in a storage area, which may be internal to the metering device and/or external, such as arranged in a cloud-based service. Further, the method may comprise receiving the usage pattern from the metering device, or from the external storage area, generating a payment request based on the usage pattern, and, optionally, receiving a payment notification indicating the requested payment has been made.

By "storage area" is generally meant a device storing information for use by a computer hardware or software. The storage area, or memory, may be arranged in the metering device, or external to the metering device. Further, the term storage area may, in the context of the present application, include distributed storage means, which for example may be arranged both on the metering device and in a cloud-based service.

The term "usage pattern" may be understood as information pertaining to the use of the tool, and more specifically to the time during which the airflow is present. The usage pattern may thus be used for retrieving an accumulated usage time, for example measured in minutes or hours. The usage pattern may also include additional information relating to for example date, location and identity or type of the tool.

The tool may be understood as an equipment or machine that can be held in the hand and used to carry out a particular function. Preferably, the tool is a powered tool that generates an airflow during operation or operates by means of an airflow. The airflow may for example be a cooling or heating airflow, a suction flow or a pressurised airflow. The tool may for example be powered by means of electricity or pressurised air. In specific examples the tool may be used for removal of solids, liquids and gases by means of an entraining suction flow and may thus be referred to as a suction device. The suction device may include a water drainage device or tool that can be used to drain water from a water-carrying pipe to allow an operator to perform work in the pipe in the drained region. Examples of such work may include welding of the pipe, wherein the suction device may comprise a nozzle that can be inserted into the water-carrying pipe for removing or at least hindering water from influencing the welding. In further examples the tool may be a saw, grinder, sander, drill, rotary hammer, and the like.

As already mentioned, steps and measures disclosed in the present application may be performed partly or wholly at a cloud-based server or service. The cloud-based server may receive the usage pattern, or information pertaining to the usage pattern, from the metering device and process the usage pattern to generate a usage time or duration. The usage may form the basis for determining a cost to be requested from the user of the tool, i.e., the tool to which the metering device is/was fitted. The cost may hence be calculated at the cloud-based server and sent to the user interface. The cost may in some examples be accessed from the server via a computing device, or a handheld device, which may be connected to the server and present the cost to the user.

The present inventive concept may further be realised as a computer program product comprising instructions to cause a system according to the second aspect to execute the methods according to embodiments described herein. The computer program product may thus provide means for performing actions as herein disclosed.

It will be appreciated that other embodiments than those described above are also possible. It will also be appreciated that any of the features in the embodiments described above for the metering device according to the first aspect may be combined with the system according to the second aspect and the method according to the third aspect.

Other objects, features and advantages of the disclosed embodiments will be apparent from the following detailed description, from the attached dependent claims as well as from the drawings. Those skilled in the art realise that different features of the present inventive concept, even if recited in different claims, can be combined in embodiments other than those described in the following.

### BRIEF DESCRIPTION OF THE DRAWINGS

Exemplifying embodiments will now be described in more detail with reference to the following appended drawings, on which:
Figure 1 is a schematic cross section of a metering device according to an embodiment;
Figure 2 is a schematic cross section of a metering device according to a further embodiment;
Figure 3, is a perspective view of a metering device according to an embodiment;
Figure 4 is a schematic side view of a metering device according to an embodiment; and
Figure 5 is a schematic outline of a system according to an embodiment, comprising a server and a metering device similar to the ones shown in figures 1 and 2.

As illustrated in the figures, the sizes of the elements and regions may be exaggerated for illustrative purposes and, thus, are provided to illustrate the general structures of the embodiments. Like reference numerals refer to like elements throughout.

### DETAILED DESCRIPTION

Exemplifying embodiments will now be described more fully hereinafter with reference to the accompanying drawings, in which currently preferred embodiments are shown. The inventive concept may, however, be embodied in many different forms and should not be construed as limited to the embodiments set forth herein. Rather, these embodiments are provided for thoroughness and completeness, and fully convey the scope of the invention to the skilled person.

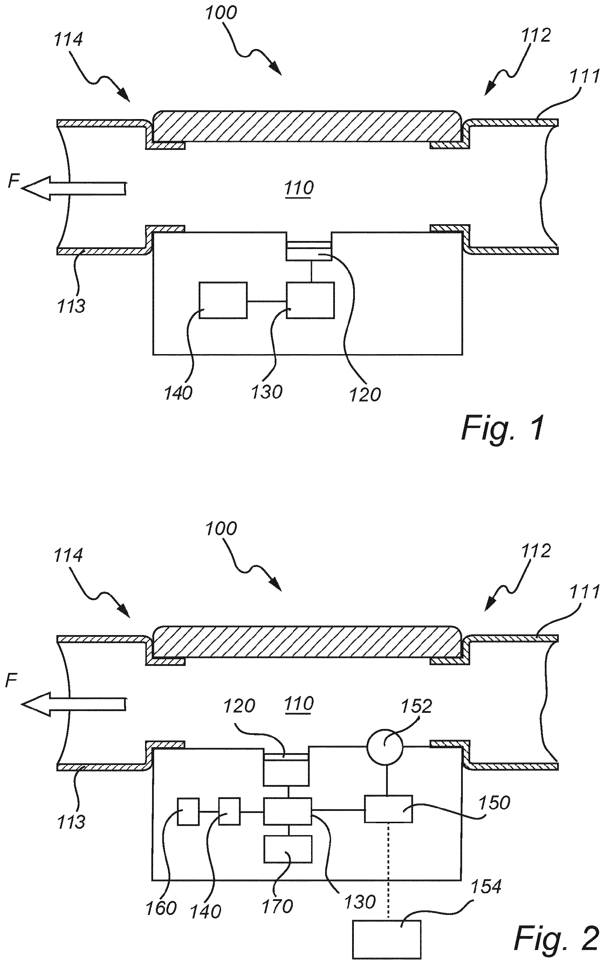

With reference to figure 1, a metering device 100 according to some embodiments of the present disclosure is described. Figure 1 shows a metering device 100, which also may be referred to as a module, retrofit or adapter, which may be configured to be arranged in an airflow path associated with a tool, such as a suction device, such that a portion of the airflow path 110 extends through the metering device 100. The metering device 100 may further comprise a flow detector 120, which may be configured to output a signal to a processor 130 configured to determine a usage pattern of the tool based on the received signal. The determined usage pattern may then be stored in a storage area, such as an internal storage area 140 comprised in the metering device 100.

The metering device 100 or, as illustrated in the present example, adapter, may comprise a body defining a channel through which the air flow, such as a suction flow F, may be conveyed. The channel may thus be considered as forming a portion of the suction flow passageway 110 of the suction device. The channel may extend between a first end 112 and a second end 114 of the adapter 100. The first end 112 may be configured to be releasably attached to a nozzle 111 of the suction device (a portion of the nozzle is indicated in the present figure), whereas the second end 114 may be configured to be releasably attached to a suction tube 113 of the suction device (a portion of the suction tube is indicated in the present figure). The design of the first and second ends 112, 114 may be adjusted in order to allow the adapter 100 to be retrofitted to previously manufactured suction devices. The first and second ends 112, 114 may be configured to be secured to the nozzle and suction tube by means of a fastening arrangement, such as a snap-fit or threading, or to be form-fitted to the nozzle and suction tube.

The flow detector 120 may be arranged at an inner wall of the suction passageway 110 and may be configured to detect a suction flow F passing through the suction passageway 110 during use of the suction device. Usage may for example be defined as detected presence of the suction flow F in the suction passageway. The signal generated by the flow detector 120 may carry information pertaining to the usage or usage pattern of the adapter 100. The flow detector 120 may for example be configured to output a digital response in the form of a high and low signal, or an on and off signal, in response to the suction flow F being present and not present. The signal may then be processed by the processor 130 into an on/off pattern as a function of time, or an accumulated working time, corresponding to the time the adapter 100 has been used.

In alternative embodiments the flow detector may be configured to record not only presence of the suction flow but also to quantify the flow. Thus, the determined usage pattern may comprise information pertaining to the flow rate, or a total volume of fluid passing through the adapter 100.

Figure 2 illustrates metering device according to some embodiments, which may be similarly configured as the adapter described above with reference to figure 1. In addition, the present metering device 100 may comprise an energy source 150 for supplying at least one of the flow detector 120 and the processor 130 with electric power. The energy source 150 may be configured to generate and/or store electric energy required for the operation of the components of the adapter.

The energy source 150 may for example comprise an electric generator 152, which may be configured to be convert motive power from the suction flow F into electrical power. The electric generator 152 may for example be an electromagnetic generator 152 comprising a rotor that can be caused to rotate by the suction flow F passing through the suction passageway 110 of the adapter. In some examples the electric generator 152 may double as a flow detector 140, such that the functionality of the electric generator 152 and the flow detector 140 is provided by the same physical entity. Thus, the generation of electrical power from the electric generator 152 may be used as an indication of the presence of a suction flow F, and the operation of the electric generator 152 may hence form a basis for the determined usage pattern.

In further examples, the flow detector 140 may be configured to generate electric power and thus provide the same functionality as the electric generator 152. The flow detector 140 and the electric generator 152 may hence be integrated into the same physical entity.

Additionally, or alternatively the energy source 150 may comprise an internal energy storage device, or battery, configured to be charged by electric power transmitted from an electric generator as mentioned above, and/or an external energy source 154 arranged outside the adapter. The internal energy storage device may hence comprise an accumulator or a rechargeable battery cell. The internal energy source may for example be recharged by electric power transferred wirelessly or over a wired interface from the external energy source 154. The external energy source 154 may for example be an external energy storage device, such as an external battery, or electric power supplied from the grid. The charging may for example be performed by arranging the adapter in a docking station.

The adapter 100 may further comprise a communication unit 160, or communicator 160, configured to transmit the usage pattern, or data pertaining to the usage of the suction device, to an external receiver (not shown). The communication unit 160 may for example be configured to transmit the data in a signal employing cellular network communication or a near-filed communication such as for example a Bluetooth protocol. The communication unit 160 may hence comprise a transmitter or antenna configured to establish a communicative coupling with the external receiver over a wireless communication channel. The communication unit 160 may retrieve the usage pattern data directly from the processor 130, or via the storage area communication unit 160 where the data may be stored until a transmission to the external receiver is requested or possible.

The adapter may further comprise a positioning unit 170, which may be used for retrieving information indicating a position, or location of the adapter and provide data to the processor. The positioning unit 170 may be used by the processor for determining the location of the adapter 100 during operation, and for associating or adding positioning information to the usage pattern. The positioning unit 170 may for example comprise a global navigation satellite system (GNSS) receiver allowing for the geospatial position of the adapter to be determined in a global coordinate system.

The communication unit 160 and the positioning unit 170 may be configured to be powered by the energy source 150 outlined above.

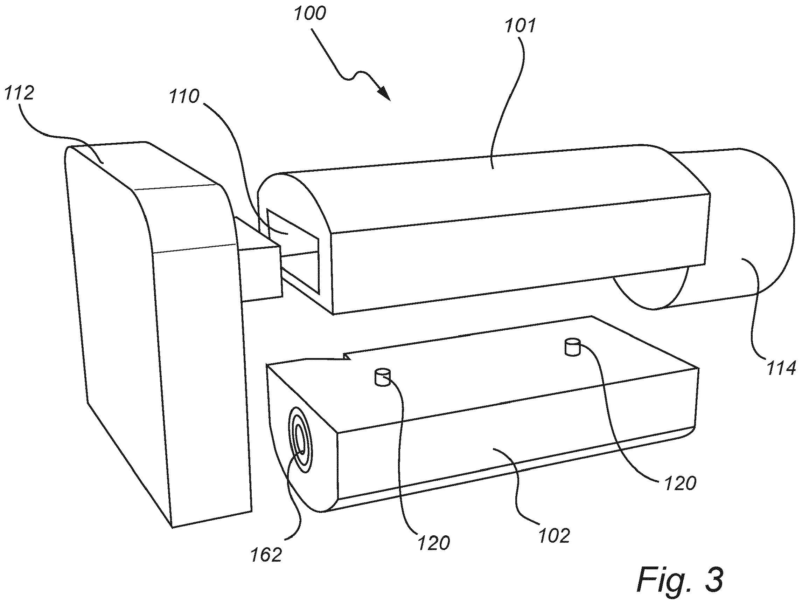

Figure 3 is a schematic perspective view of a metering device 100 according to some embodiments, which may be similarly configured and have similar functionalities as the embodiments disclosed above with reference to figures 1 and 2. Thus, the metering device may be formed as an adapter configured to be arranged in the airflow path 110 of a tool being powered by and/or operating by means of an airflow of which at least a part passes through a flow passageway 110 extending through the interior of the metering device 100. As illustrated in the present figure, the passageway or channel may extend between a first end portion 112 and a second end portion 114, which may be configured to be attached to for example a nozzle and a suction tube or hose of the tool.

The metering device 100 may be formed of two or more parts which may be produced separately and assembled into the metering device 100. In the example shown in figure 3, the airflow passageway 110 and the second end portion 114 may be integrally formed in a single piece 101, whereas the first end portion 112 may be formed as a separate item that can be attached to the passageway 110. Further, the intelligence in the form of the flow sensor 120, the processor 130 and a communication unit 160, such as a NFC unit 162, may be provided in a separate module 102 which can be attached to the airflow passageway 110 such that the airflow sensor 120 is allowed to detect the airflow. Further, the NFC unit 162 may arranged to read data from the nozzle when attached to the first end portion 112.

In the above examples in figures 1-3 the metering device 100 may be formed as an adapter suitable to be held in the hand. Preferably, the adapter may comprise a gripping means, such as a handle, by which a user may hold the adapter. Alternatively, or additionally the adapter may have a shape and size allowing for it to be gripped in the hand of the person using the tool. An outer surface of the adapter may for example have a curvature allowing it to be fitted in a hand of the user.

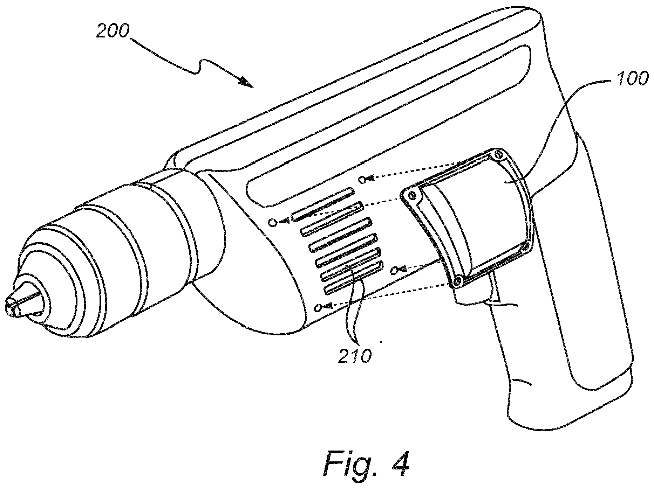

Figure 4 is a schematic sideview of a metering device 100 according to some embodiments, which may be similarly configured, and comprise the similar functionality as, the examples illustrated above in connection with figures 1-3. However, the present example of the metering device 100 may be configured to be attached to at least partly cover an airflow outlet opening 210 of the tool, such as the air vents 210 of a housing of the tool 200. The tool may for example be a handheld power drill, and the metering device 100 may be configured to be attached to the outside of the housing by means of fasteners such as for example screws. The first end portion of the airflow passageway of the metering device 100 may be arranged to face the outlet opening 210 of the tool, such that the airflow leaving the tool 200 may pass into the metering device 200 and be detected by the flow sensor arranged inside the metering device as described above in connection with figures 1-3. The second end portion of the airflow passageway of the metering device 100 may be arranged opposite to the first end portion, facing away from the outlet opening. In this way, the airflow generated by the tool during its operation may pass through the airflow path of the metering device 100 and be detected by the flow sensor so as to generate usage pattern data.

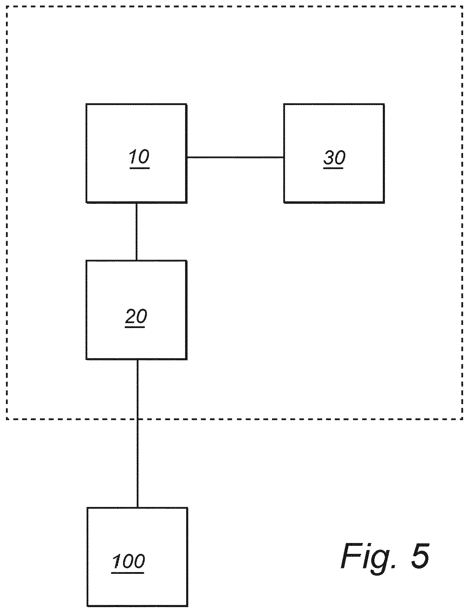

Figure 5 is a schematic outline of a system according to some embodiments, comprising a server 10 and metering device 100 which may be similarly configured as the metering devices discussed in connection with figures 1-4. The server 10 may be configured to receive the usage pattern from the metering device 100, and to generate a payment request or payment information based on the usage pattern. The system may further comprise a communication interface 20 that may be configured to receive the usage pattern from the metering device, or from a cloud-based storage area. The communication interface 20 may be wired or wireless and may for example comprise a terminal against which the metering device 100 may be connected in order to allow the stored usage pattern data to be read and transmitted to the server 10. In some examples the communication interface 20 may comprise a receiver, such as the previously discussed external cellular network-based receiver, for receiving the usage pattern data from the communication unit 160 of the metering device 100. The communication interface 20 may further be configured to receive payment information, for example entered by a user or provided from an external payment system, indicating that the requested payment has been made.

The system may also comprise a user interface 30, which may be configured to display the payment request, or an indication thereof, to the user. The user interface 30 may for example comprise a display on which the request may be shown as a text or a symbol. The user interface 30 may further be configured to receive input from a user, for example indicating that a payment has been made, or requesting more information regarding for example the usage pattern, to be displayed.

The server 10 and at least one of the communication interface 20 and the user interface 30 may be provided in a cloud-based environment 40, which may have functions and data storage distributed over multiple locations and which may be available over the Internet. The infrastructure providing the user interface 30 may for example be cloud-based and can be accessed by the user via a terminal device, such as a computer or a smartphone, connected to the cloud-based user interface 30. Similarly, the server 10 and, potentially, the storage area 140 may be cloud-based and accessed remotely over a communication channel such as for example the Internet.

In one example, the user of the tool may be associated with an account comprising payment information associated with the user and rental details concerning the tool(s) the user is renting. The user may log on to the account to administer the payment details and for ordering the tools and equipment he or she wishes to rent. The equipment may be delivered together with a metering device as outlined above, which may be provided with a SIM allowing for the metering device to communicate with the server and deliver the data related to the usage of the tool. The server may then use this data to generate a payment request and cause the corresponding sum to be withdrawn from the user's account.

## Claims

1. A metering device (100) configured to be arranged in an airflow path (110) of a handheld tool such that at least a part of the airflow path extends through the metering device, wherein the metering device comprises:
a flow detector (120) configured to detect an airflow (F) passing through the airflow path during use of the tool; and
a processor (130) configured to receive a signal from the flow detector;
wherein the processor is configured to determine a usage pattern of the tool based on the received signal; and
wherein the processor is further configured to cause the usage pattern to be stored in a storage area (140).

2. The metering device according to claim 1, further comprising an energy source (150) configured to power at least one of the flow detector and the processor.

3. The metering device according to claim 2, wherein the energy source comprises an electric generator (152) configured to be driven by the airflow.

4. The metering device according to claim 3, wherein the electric generator forms the flow detector.

5. The metering device according to any of claims 2-4, wherein the energy source comprises an internal battery (150) arranged in the metering device, and wherein the internal battery is configured to be charged by electric power transmitted from an external energy source (154) arranged outside the metering device.

6. The metering device according to any of the preceding claims, further comprising a communication unit (160) configured to transmit the usage pattern to an external receiver.

7. The metering device according to claim 6, wherein the communication unit is further configured to receive information indicating an identity of the tool.

8. The metering device according to any of the preceding claims, further comprising a positioning unit (170) configured to gather positioning data indicating a location of the metering device, and wherein the processor is configured to associate the usage pattern with the location of the metering device.

9. The metering device according to any of the preceding claims, wherein the metering device comprises a passageway extending through the metering device and being configured to form part of a suction passageway of the tool.

10. The metering device according to claim 10, comprising a first end (112) configured to be attached to a nozzle (111) of the tool and a second end (114) configured to be attached to a suction tube (113) of the tool.

11. The metering device according to any of the preceding claims, wherein the tool is a suction device for water drainage, and wherein the metering device is configured to convey a suction flow comprising water.

12. A system comprising a server (10) and a metering device according to any of the preceding claims, wherein the server is configured to:
receive the usage pattern from the metering device; and
generate a payment request based on the usage pattern.

13. The system according to claim 12, further comprising a communication interface (20) configured to receive the usage pattern from the metering device or from a cloud-based storage area.

14. The system according to claim 12 or 13, further comprising a user interface (30) configured to display the payment request to a user, wherein the server is further configured to receive a payment notification indicating that the requested payment has been made.

15. The system according to any of claims 12-14, wherein the server is a cloud-based server.
